# EUROPEAN PATENT SPECIFICATION

(11) **EP 4 094 413 B1**
(45) Date of publication and mention of the grant of the patent: **04.10.2023**
(21) Application number: 20705352.1
(22) Date of filing: 14.02.2020
(51) Int. Cl.: H04L 9/40, H04L 61/2575, H04L 61/2514, H04L 101/30, H04L 101/33, H04L 101/672

(54) **A SYSTEM AND METHOD FOR UDP DDOS PROTECTION**
SYSTEM UND VERFAHREN FÜR UDP-DDOS-SCHUTZ
SYSTÈME ET PROCÉDÉ DE PROTECTION D'UDP CONTRE LE DDOS

(43) Date of publication of application: 30.11.2022
(73) Proprietor: Huawei Technologies Co., Ltd., Shenzhen, Guangdong 518129 (CN)
(72) Inventor: LIU, Bingyang, 80992 Munich (DE); HALACHMI, Nir, 80992 Munich (DE); JIANG, Weiyu, 80992 Munich (DE); TOUITOU, Dan, 80992 Munich (DE)
(74) Representative: Gill Jennings & Every LLP
(86) International application number: PCT/EP2020/053842
(87) International publication number: WO 2021/160277

(56) References cited:
- EP-A1- 1 819 134
- US-A1- 2017 366 577
- US-A1- 2019 020 678

## Description

### TECHNICAL FIELD

The present disclosure, in some embodiments thereof, relates to User Datagram Protocol (UDP) protection. More specifically but not exclusively, to a method and system for User Datagram Protocol (UDP) Distributed Denial of Service (DDoS) protection.

### BACKGROUND

Distributed Denial of Service (DDoS) attacks occur when a group of computers, the attackers, sends fake traffic toward one or more Internet Protocol (IP) addresses of an application related as victim application. This huge amount of malicious traffic generates an extreme load on the victim application servers and/or surround network, which effectively shutdown the service provided by the victim application. Attacks are either spoofed or non-spoofed. In a non-spoofed attack, attackers are using their real IP when sending traffic, while in spoofed attacks the attacker insert fake source IPs in the packets. Non-spoofed attacks are considered simpler to protect, since anomaly detection and blocking can be applied per source IP. Spoofed attacks are more complex to filter, since there is no single source that can be classified, detected and eventually blocked. Over the years methods for filtering Transmission Control Protocol (TCP) spoofed traffic where developed, such as SYN cookies, out of window ACK, http redirect and/or the like. US 2019/0020678 A1 discloses techniques for a web conferencing operator to mitigate DDOS attacks. US 2017/0366577 A1 discloses a method of providing DDoS protection for a network that includes IP addresses as low as a single IP address. EP 1819134 A1 discloses a symmetric network address translation system using a Simple Traversal of UDP over NAT technique.

### SUMMARY

The invention is defined in the appended independent claims.

According to a first aspect, a system for protecting application servers using User Datagram Protocol (UDP) from Distributed Denial of Service (DDoS) attacks, comprising:
a protocol interface (201) adapted to receive from a Session Traversal Utilities for Network Address Translation (STUN) server (304) a plurality of requests for a source Internet Protocol (IP) address and source port, the plurality of requests originated from at least one application server;
a processing unit (210) adapted to allocate an available destination IP address and a destination port from a pool (203) of destination IP addresses and destination ports and to provide the STUN server (304) the allocated destination IP address and destination port in response to the reception of the plurality of requests;
wherein the processing unit (210) identifies a DDoS attack on one of the allocated destination IP addresses by detecting high traffic volume on the one of the allocated destination IP addresses, and blocking the attacked destination IP address in response to the detected attack, by stopping allocating destination ports on the attacked destination IP address.

According to a second aspect, a method for protecting application servers using User Datagram Protocol (UDP) from Distributed Denial of Service (DDoS) attacks, comprising:
receiving from a Session Traversal Utilities for Network Address Translation (STUN) server (304) a plurality of requests for a source IP address and source port, originated by at least one application server;
allocating by a processing unit (210), an available destination IP address and destination port from a pool (203) of IP addresses and ports, and providing the allocated destination address and destination port to the STUN server (304) in response to the reception of the plurality of requests; and
detecting by the processing unit (210), a DDoS attack on the destination IP address allocated by the processing unit (210), and blocking the attacked destination IP address in response to the DDoS attack, by stopping allocating destination ports on the attacked destination IP address.

According to a third aspect, a computer program provided on a non-transitory computer readable storage medium storing instructions for performing a method for protecting application servers using User Datagram Protocol (UDP) from Distributed Denial of Service (DDoS) attacks, the method comprising:
receiving from a Session Traversal Utilities for Network Address Translation (STUN) server (304) a plurality of requests for a source IP address and source port, originated by at least one application server;
allocating by a processing unit (210), an available destination IP address and destination port from a pool (203) of IP addresses and ports, and providing the allocated destination address and destination port to the STUN server in response to the reception of the plurality of requests; and
detecting by the processing unit (210), a DDoS attack on the destination IP address allocated by the processing unit (210), and blocking the attacked destination IP address in response to the DDoS attack, by stopping allocating destination ports on the attacked destination IP address.

In a further implementation of the first, second and third aspect, the processing unit (210) blocks the attacked IP address by sending a blackholing request to an upstream router.

In a further implementation of the first, second and third aspect, the processing unit (210) blocks the attacked IP addresses for a predefined amount of time.

In a further implementation of the first, second and third aspect, the processing unit (210) is further adapted to execute a Network Address Translation (NAT) module (205), which translates destination IP address and destination port allocated by the processing unit to the application server IP address and port, based on the plurality of requests from the STUN server (304).

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

In the drawings:
FIG. 1 schematically shows a diagram of the interaction between a STUN server and an application server;
FIG. 2 schematically shows one possible implementation of the system of the disclosure, according to one or more embodiments of the disclosure;
FIG. 3 schematically shows a sequence chart of the interaction between a client, a service control, an application server, a STUN server and a protection system for protecting UDP protocol users from DDoS attacks, according to one or more embodiments of the disclosure; and
FIG. 4 schematically shows a flow chart representing the method of the disclosure, according to one or more embodiments of the disclosure.

### DETAILED DESCRIPTION

The present disclosure, in some embodiments thereof, relates to methods and systems for User Datagram Protocol (UDP) Distributed Denial of Service (DDoS) protection. More specifically, but not exclusively, the present disclosure relates to User Datagram Protocol (UDP) Distributed Denial of Service (DDoS) protection through Session Traversal Utilities for Network Address Translation (STUN) requests.

UDP spoofed attacks are difficult to filter accurately due to the lack of a generic, protocol independent connection establishment process that exists in Transmission Control Protocol (TCP). For that reason, very few methods for UDP anti-spoofing exist; most of them are for well-defined protocols such as Domain Name System (DNS) and Session Initiation Protocol (SIP) control. For the rest of the UDP traffic, usually attack filtering is conducted by identification of common traffic characteristics during quiescence and rate-limiting and/or by blocking traffic that does not match common traffic characteristics during attacks. Such methods are complex to implement, lack accuracy and often circumvented by the attacker.

In addition, a considerable portion of UDP traffic is latency and/or jitter sensitive. Therefore, the known methods of diverting traffic to some remote scrubbing service during attacks cannot be applicable for UDP traffic.

Other methods of protection require changing the application either on the client side or on the server side. This is usually a fatal for the DDoS protection customers. Therefore, there is a need for an effective protection system and method for UDP from DDoS attacks.

UDP ephemeral traffic is proceeded by some exchange of information over some control protocol. This means that applications using ephemeral UDP contain a preliminary part denoted as a control part, through which the application authenticates and gets control information. This part is sometimes using either non-ephemeral UDP, but in most cases, a TCP protocol is used or even Transport Layer Security (TLS) protocol. When an application server denoted as client, wants to communicate with another application server, the client requests for a destination IP address and a destination port from a STUN server. An IP address is the address of the system and/or computer and /or computing device on which an application is running, and a port is a 16 bit number that determines to which service and /or application (within the system and/or computer and /or computing device) the packet belongs. The IP address and port used for the ephemeral UDP are provided over a control channel to the application and to the client, and the communication between the application and the client is then made through the provided IP address and port.

In other words, the client usually gets the destination IP and port toward which the traffic is sent, over some control session that is already established between him and the application server.

Session Traversal Utilities for Network Address Translation (STUN) is a protocol originally designed for Voice over Internet Protocol (VoIP) (Session Initiation Protocol (SIP)). However, the STUN protocol is used in many other cases. Due to the vast deployment of Network Address Translation (NAT) modules, many servers have a private IP address only. A private IP is an IP address that is only used by devices communicating to each other on the same private network. So, a private IP address cannot be used as a destination IP for the ephemeral UDP. Therefore, most applications as a part of the control session send a request to a STUN server to discover what is the public IP address and port that has to be disclosed to the client. A public IP address means, a globally routable unicast IP address, which can be reached via the Internet from any computer in the world. In addition, even when STUN is not needed and/or applicable, it is still a configuration option that does not require changing the application.

The STUN server enables an application server behind NAT to discover what public IP address and Port the application server private IP and port are translated to. The STUN server shares the public IP address and port with the client over the control session and opens a pinhole for incoming ephemeral UDP traffic from the client to the application server.

The present disclosure, in some embodiments thereof, provides methods and systems for protecting application servers using UDP protocol, from DDoS attacks.

A protection system executed by a processing unit, according to some embodiments of the present disclosure, adapts communication with a STUN server, which receives from application servers and services using UDP protocol, a plurality of requests for source IP addresses and source ports. Then, instead of providing the requested source IP addresses and ports by the STUN server, the protection system according to some embodiments of the present disclosure provides protected destination IP addresses, and destination ports. The destination IP addresses, and destination ports are allocated by the protection system from a dedicated pool of IP addresses and ports, to the application server or service requesting for the source IP addresses, and ports. This way, once the protection system detects a DDoS attack on one of the IP addresses allocated by it, the protection system blocks the attacked IP address by stopping allocating ports to the attacked IP address and by requesting from an upstream router to blackhole the attacked IP address.

One of the advantages of the present disclosure, in some embodiments thereof, lies in the fact that the present disclosure provides an accurate anti spoofing process for ephemeral UDP. This process is executed without requiring changes and reprogramming of the application or of the server. Another advantage is that unlike existing solutions, systems or methods according to some embodiments of the present disclosure are not limited by the bandwidth of the internet connection. Therefore, there is no need to redirect and/or divert the traffic to a scrubbing center and consequently the latency of the UDP traffic is not affected.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

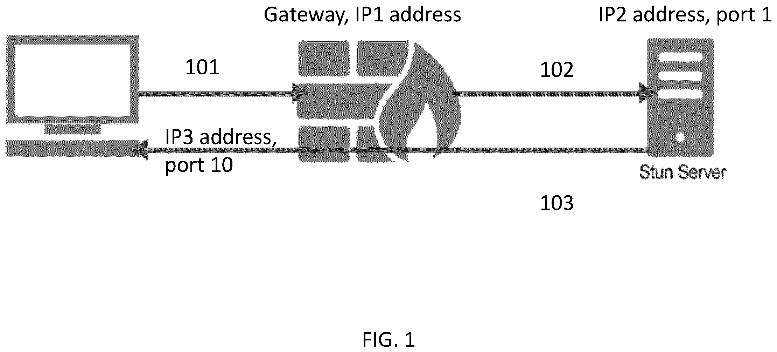

Reference is now made to FIG. 1, which schematically describes an exemplary interaction between an application server 110 and a STUN server 112. At 101, application server 110, which is in network protected by a gateway 111, sends a STUN request, through gateway 111 with an IP address denoted as IP1, to STUN server 112. Then, at 102, the gateway 111 sends the STUN request to STUN server 112, to IP address and port denoted IP2, port 1. As depicted in 103 the STUN Server 112 sends back to application server 110, through the gateway 111, a response with a public IP address denoted as IP3 address, port 10. When the application server 110 establishes a session, the application server 110 notifies the client application to send responses back to it on IP3 address, port 10.

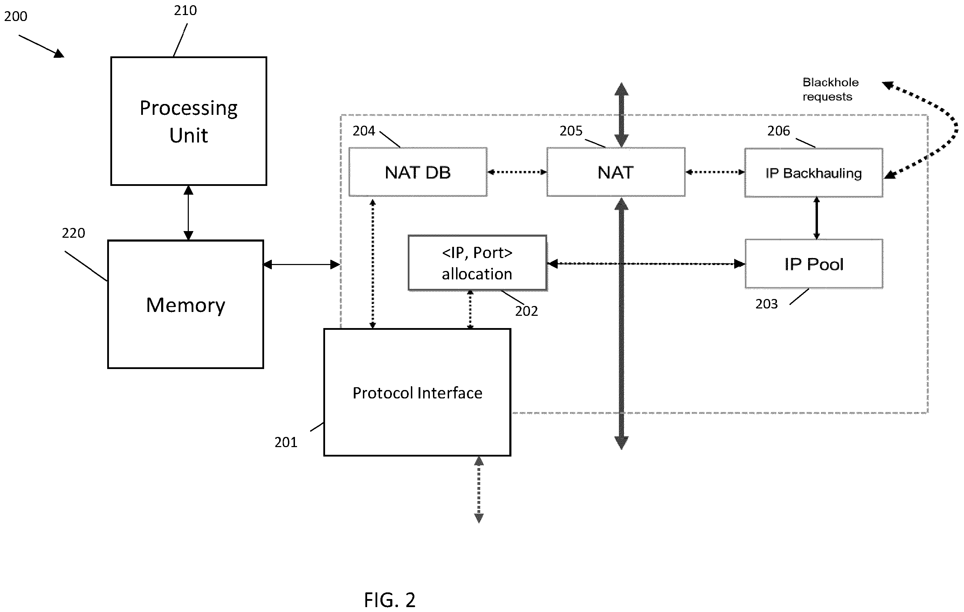

Reference is now also made to FIG. 2, which schematically discloses a system 200 for protecting UDP protocol users from DDoS attacks, according to one or more embodiments of the disclosure.

System 200 includes a processing unit 210, a memory 220, which stores instructions executed by the processing unit 210, and a protocol interface 201. System 200 is connected to a network through the protocol interface 201. The network connects system 200 with different application servers and services, and is controlled by a service control. An application server which initiates a connection with another application server, is defined herein as client. The protocol interface 201, receives STUN requests from application servers through a STUN server.. The STUN server retrieves the source IP address and source port of the application server originated the STUN request, however, according to some embodiments of the present disclosure, the STUN server does not provide the source IP address and port to the application server. Instead, when the protocol interface 201 receives a STUN request, the processing unit 210 invokes an <IP, Port> allocation instructions 202, accessing IP addresses and ports pool 203 in the memory 220, and retrieves an available destination IP address and destination port denoted as <public_IP, public_Port> couple, from the pool 203. As used herein, available IP address and port is a port that is not currently used by another application server, and whose IP address is not currently blackholed. The processing unit 210, returns the allocated <public_IP, public_Port> couple to the protocol interface 201. Protocol interface 201 creates a new translation entry in a Network Address Translation (NAT) Data Base (DB) 204, which is connected to a NAT module 205, which maps one IP address to another IP address. Whenever the NAT module 205, gets a UDP packet from upstream, the NAT module 205, retrieves the translation entry from the NAT DB 204, and replaces the source IP address and port of the application server with the destination IP and port allocated by processing unit through the allocation instructions 202. The protocol interface 201, then returns the allocated <public_IP, public_port> to the application server which originated the request.

Whenever the processing unit 210 detects an attack on an IP address allocated from the IP Pool 203, the processing unit 210, stops allocating ports from the detected attacked IP address and sends a blackholing request to an upstream router. The processing unit 210, also executes instructions creating a function of an IP blackholing controller 206, which observes the traffic volume on the IP addresses allocated from the IP pool 203. Whenever the IP blackholing controller 206 identifies a high traffic volume on the IP address allocated from the IP Pool 203, the IP blackholing controller 206 instructs the IP Pool 203, to stop allocating ports from the detected attacked IP address and sends a blackholing request to the upstream router.

In some embodiments of the disclosure, the NAT module 205, also provides statistics about the packets received to the IP blackholing controller 206.

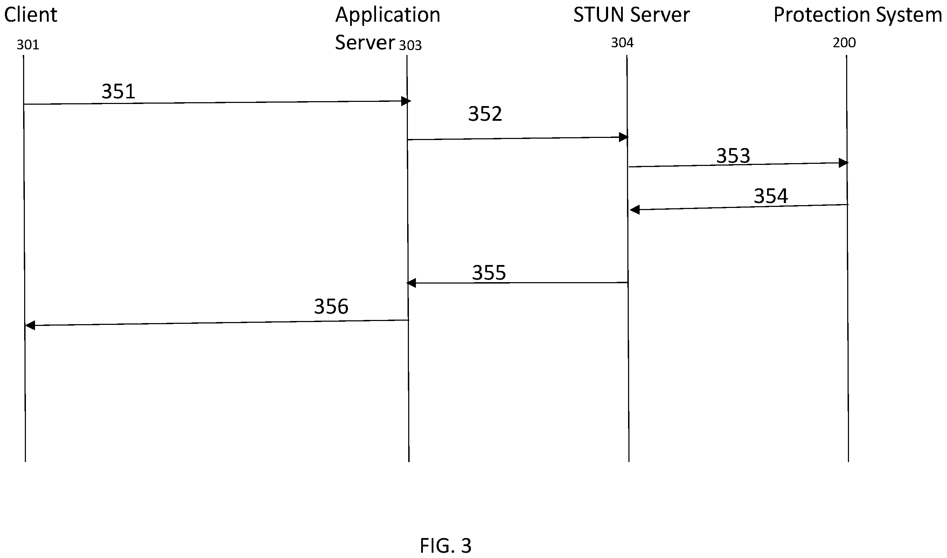

Reference is now also made to FIG. 3, which schematically discloses a sequence chart of the interaction between a client 301, a service control 302, an application server 303, a STUN server 304 and the system 200 for protecting UDP protocol users from DDoS attacks, according to one or more embodiments of the disclosure.

At 351, a client 301, establishes connection with a protected application server 303. In the first connection i.e. the initiation of the connection, a TCP protocol may be used and it may be protected from DDoS attacks using standard methods. The client 301 asks the application server 303, for an IP address and a port, from which the connection with the application server 303 takes place. The application server 303, has its private IP address and allocates an ephemeral port, denoted as <original_IP, original_Port>. However, the private IP address of the application server cannot be disclosed to the client 301. Then, at 352, the application server 303, sends a STUN request to a STUN server 304, in order to determine the source IP address and source port through which the communication with the client 301 takes place. At 353, the STUN request is received by protection system 200, from the STUN server 304. The protection system 200, instead of providing the source IP address and Port of the application server, to the client 301 and to the application server 303, allocates an IP address and port couple denoted <public_IP, public_Port> from a pool of IP addresses and ports dedicated to the protection system 200. Then, the protection system sets a translation entry (<original_IP, original_Port>, <public_IP, public_Port>) in its translation database; and at 354, the protection system replies the STUN server 304 with the IP address and port denoted <public_IP, public_Port>, which are the IP address and port allocated by the protection system 200.

Following this exchange of STUN messages, at 355 the STUN server provides the destination IP address and port denoted <public_IP, public_Port> to the application server 303, which at 356, shares the <public _IP, public_Port> with the client 301. The client 301, then start sending UDP packets toward <public_IP, public_Port>. These packets are routed to the protection system 200, which redirects them to the <original_IP, original_Port> of the application server 303.

According to some embodiments of the disclosure, whenever an UDP DDoS attack is launched on one of the IP addresses of the protection system 200 (i.e. on the public IP allocated by the protection system 200), the protection system 200 sends a blackholing request for that IP address to an upstream router. In some embodiments of the disclosure, the request for blackholing may be sent for a fixed amount of time, or if routing statistic is available from the router (s.a netflow), the request for blackholing may be sent until the attacks ends. In both cases the protection system 200, stops allocating ports from the attacked IP address, thus blocks the attack.

In some embodiments of the disclosure the application server 303 may be a network device or service. For example a mobile device, cellphone or the like.

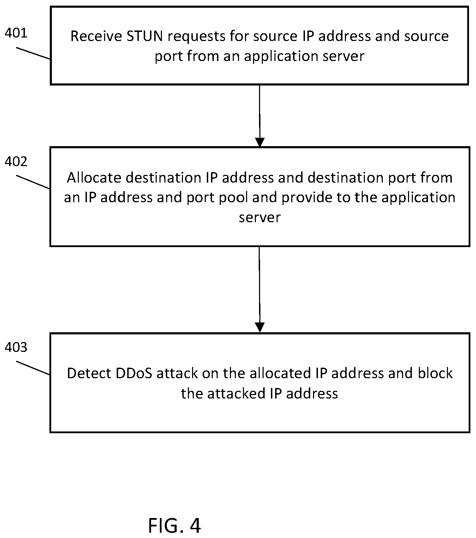

Reference is now made to FIG. 4, which schematically shows a flow chart representing a method for protecting UDP protocol users from DDoS attacks trough STUN requests, according to some embodiments of the present disclosure.

At 401, a plurality of STUN requests for a source IP address and a source port are received by a protection system 200, from a STUN server, originated by at least one application server. The application server requests for the IP address and port in order to communicate with a client and to receive UDP packets from the client through the IP address and port requested.

At 402, an available destination IP address and destination port are allocated by the processing unit 210 of the protection system 200, from a pool of IP addresses and ports dedicated to the protection system 200, and which is stored in memory 220. The allocated IP address and port are provided in return to the requesting application server and to the client. The application server and the client start to communicate through the allocated IP address and port, so that the client send UDP packets to the IP address and port allocated by the protection system 200. Every time a packet reaches the protection system, the protection system translates the public IP and port of the application server 303 to the private IP and port as they appeared in the original STUN request, and the packet reaches the application server 303 (to whom the IP and Port was allocated).

At 403, a DDoS attack on one of the protection system IP addresses is detected, by the processing unit 210 of the protection system 200. The attack is detected according to identification of a high traffic volume on the IP address under attack. Upon detection of the DDoS attack, a blackhole request on the attacked IP address is sent by the processing unit of the protection system 200 to an upstream router, and the allocation of destination ports on that IP address is stopped.

The attacked IP address is blocked for a predefined amount of time, by the processing unit 210 according to one or more embodiments of the disclosure.

In one or more embodiments, the disclosure relates to a computer program for performing a method for protecting application servers using User Datagram Protocol (UDP) from Distributed Denial of Service (DDoS) attacks. The computer program may be provided on a non-transitory computer-readable storage medium. The computer program is adapted to perform a method, which comprises:
receiving from a Session Traversal Utilities for Network Address Translation (STUN) server a plurality of requests for a source IP address and source port, originated by at least one application server;
allocating by a processing unit, an available destination IP address and destination port from a pool of IP addresses and ports, and providing the allocated destination address and destination port to the STUN server in response to the reception of the plurality of requests; and
detecting by the processing unit, a DDoS attack on the destination IP address allocated by the processing unit, and blocking the attacked destination IP address in response to the DDoS attack, by stopping allocating destination ports on the attacked destination IP address.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant models for protecting UDP users from DDoS attacks will be developed and the scope of the term model for protecting UDP users from DDoS attacks is intended to include all such new technologies a priori.

As used herein the "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A system for protecting application servers using User Datagram Protocol, UDP, from Distributed Denial of Service, DDoS DDoS, attacks, comprising:
a protocol interface (201) adapted to receive from a Session Traversal Utilities for Network Address Translation , STUN, server (304) a plurality of requests for a source Intemel Protocol, IP, address and source port, the plurality of requests originated from at least one application server; and **characterized in that** the system further comprises:
a processing unit (210) adapted to allocate an available destination IP address and a destination port from a pool (203) of destination IP addresses and destination ports and to provide the STUN server (304) the allocated destination IP address and destination port in response to the reception of the plurality of requests;
wherein the processing unit (210) identifies a DDoS attack on one of the allocated destination IP addresses by detecting high traffic volume on the one of the allocated destination IP addresses, and blocking the attacked destination IP address in response to the detected attack, by stopping allocating destination ports on the attacked destination IP address.

2. The system of claim 1, wherein the processing unit (210) blocks the attacked IP address by sending a blackholing request to an upstream router.

3. The system of claim 1, wherein the processing unit (210) blocks the attacked IP addresses for a predefined amount of time.

4. The system of claim 1, wherein the processing unit (210) is further adapted to execute a Network Address Translation, NAT, module (205), which translates destination IP address and destination port allocated by the processing unit to the application server IP address and port, based on the plurality of requests from the STUN server (304).

5. A method for protecting application servers using User Datagram Protocol, UDP UDP, from Distributed Denial of Service, DDoS, attacks, comprising:
receiving from a Session Traversal Utilities for Network Address Translation, STUN, server (304) a plurality of requests for a source Internet Protocol, IP, address and source port, originated by at least one application server; and **characterized in that** the method further comprises:
allocating by a processing unit (210), an available destination IP address and destination port from a pool (203) of IP addresses and ports, and providing the allocated destination address and destination port to the STUN server (304) in response to the reception of the plurality of requests; and
detecting by the processing unit (210), a DDoS attack on the destination IP address allocated by the processing unit (210), and blocking the attacked destination IP address in response to the DDoS attack, by stopping allocating destination ports on the attacked destination IP address.

6. The method of claim 5, wherein the processing unit (210) blocks the attacked IP address by sending a blackholing request to an upstream router.

7. The method of claim 5, wherein the processing unit (210) blocks the attacked IP addresses for a predefined amount of time.

8. The method of claim 5, wherein the processing unit (210) is further adapted to execute a Network Address Translation, NAT, module (205), which translates destination IP address and destination port allocated by the processing unit to the application server IP address and port, based on the plurality of requests from the STUN server (304).

9. A computer program provided on a non-transitory computer readable storage medium storing instructions for performing a method for protecting application servers using User Datagram Protocol, UDP, from Distributed Denial of Service, DDoS, attacks, the method comprising:
receiving from a Session Traversal Utilities for Network Address Translation, STUN, server (304) a plurality of requests for a source Internet Protocol, IP, address and source port, originated by at least one application server; and **characterized in that** the system further comprises:
allocating by a processing unit (210), an available destination IP address and destination port from a pool (203) of IP addresses and ports, and providing the allocated destination address and destination port to the STUN server in response to the reception of the plurality of requests; and
detecting by the processing unit (210), a DDoS attack on the destination IP address allocated by the processing unit (210), and blocking the attacked destination IP address in response to the DDoS attack, by stopping allocating destination ports on the attacked destination IP address.

10. The computer program provided on a non-transitory computer readable storage medium storing instructions of claim 9, wherein the processing unit (210) blocks the attacked IP address by sending a blackholing request to an upstream router.

11. The computer program provided on a non-transitory computer readable storage medium storing instructions of claim 9, wherein the processing unit (210) blocks the attacked IP addresses for a predefined amount of time.

12. The computer program provided on a non-transitory computer readable storage medium storing instructions of claim 9, wherein the processing unit (210) is further adapted to execute a Network Address Translation, NAT, module (205), which translates destination IP address and destination port allocated by the processing unit to the application server IP address and port, based on the plurality of requests from the STUN server (304).

## Patentansprüche

1. System zum Schutz von User Datagram Protocol (UDP) verwendenden Anwendungsservern vor Distributed Denial of Service-Angriffen (DDoS) (DDoS-Angriffe), umfassend:
eine Protokollschnittstelle (201), die dafür ausgelegt ist, von einem Session-Traversal-Utilities-for-Network-Address-Translation-Server (STUN-Server) (304) eine Vielzahl von Anforderungen einer Quell-Internet-Protocol-Adresse (Quell-IP-Adresse) und eines Quellports zu empfangen, wobei die Vielzahl der Anforderungen von mindestens ein Anwendungsserver stammt; und **dadurch gekennzeichnet, dass** das System ferner Folgendes umfasst:
eine Verarbeitungseinheit (210), die dafür ausgelegt ist, als Reaktion auf die Vielzahl von Anforderungen aus einem Pool (203) von Ziel-IP-Adressen und Zielports eine verfügbare Ziel-IP-Adresse und einen verfügbaren Zielport zuzuweisen und dem STUN-Server (304) die zugewiesene Ziel-IP-Adresse und den zugewiesenen Zielport bereitzustellen;
wobei die Verarbeitungseinheit (210) einen DDoS-Angriff auf eine der zugewiesenen Ziel-IP-Adressen feststellt, indem sie bei einer der zugewiesenen Ziel-IP-Adressen ein hohes Verkehrsvolumen erkennt und als Reaktion auf den erkannten Angriff die angegriffene Ziel-IP-Adresse durch Stoppen des Zuweisens von Zielports an der angegriffenen Ziel-IP-Adresse blockiert.

2. System nach Anspruch 1, wobei die Verarbeitungseinheit (210) die angegriffene IP-Adresse blockiert, indem sie an einen vorgelagerten Router eine Blackholing-Anforderung sendet.

3. System nach Anspruch 1, wobei die Verarbeitungseinheit (210) die angegriffenen IP-Adressen über einen vordefinierten Zeitraum blockiert.

4. System nach Anspruch 1, wobei die Verarbeitungseinheit (210) ferner dazu ausgelegt ist, ein Netzwerkadressübersetzungs-Modul (Network Address Translation - NAT) (205) auszuführen, das basierend auf der Vielzahl von Anforderungen von dem STUN-Server (304) die Ziel-IP-Adresse und den Zielport, die von der Verarbeitungseinheit der Anwendungsserver-IP-Adresse und dem Anwendungsserver-Port zugewiesen wurden, übersetzt.

5. Verfahren zum Schutz von User Datagram Protocol (UDP UDP) verwendenden Anwendungsservern vor Distributed Denial of Service-Angriffen (DDoS-Angriffen), umfassend:
Empfangen einer Vielzahl von Anforderungen einer Quell-Internet-Protocol-Adresse (Quell-IP-Adresse) und eines Quellports von einem Session-Traversal-Utilities-for-Network-Address-Translation-Server (STUN-Server) (304), die von mindestens einem Anwendungsserver stammt; und **dadurch gekennzeichnet, dass** das Verfahren ferner Folgendes umfasst:
Zuweisen einer verfügbaren Ziel-IP-Adresse und eines verfügbaren Zielports aus einem Pool (203) von IP-Adressen und Ports durch eine Verarbeitungseinheit (210) und Bereitstellen der zugewiesenen Zieladresse und des zugewiesenen Zielports an den STUN-Server (304) als Reaktion auf den Empfang der Vielzahl von Anforderungen; und
Erkennen eines DDoS-Angriffs auf die von der Verarbeitungseinheit (210) zugewiesene Ziel-IP-Adresse durch die Verarbeitungseinheit (210) und Blockieren der angegriffenen Ziel-IP-Adresse als Reaktion auf den DDoS-Angriff durch Stoppen des Zuweisens von Zielports an der angegriffenen Ziel-IP Adresse.

6. Verfahren nach Anspruch 5, wobei die Verarbeitungseinheit (210) die angegriffene IP-Adresse blockiert, indem sie an einen vorgelagerten Router eine Blackholing-Anforderung sendet.

7. Verfahren nach Anspruch 5, wobei die Verarbeitungseinheit (210) die angegriffenen IP-Adressen über einen vordefinierten Zeitraum blockiert.

8. Verfahren nach Anspruch 5, wobei die Verarbeitungseinheit (210) ferner dazu ausgelegt ist, ein Netzwerkadressübersetzungs-Modul (Network Address Translation - NAT) (205) auszuführen, das basierend auf der Vielzahl von Anforderungen von dem STUN-Server (304) die Ziel-IP-Adresse und den Zielport, die von der Verarbeitungseinheit der Anwendungsserver-IP-Adresse und dem Anwendungsserver-Port zugewiesen wurden, übersetzt.

9. Computerprogramm, das auf einem nichtflüchtigen computerlesbaren Speichermedium bereitgestellt wird und in dem Anweisungen zum Durchführen eines Verfahrens zum Schutz von User Datagram Protocol (UDP) verwendenden Anwendungsservern vor Distributed Denial of Service-Angriffen (DDoS-Angriffen) gespeichert ist, das Verfahren umfassend:
Empfangen einer Vielzahl von Anforderungen einer Quell-Internet-Protocol-Adresse (Quell-IP-Adresse) und eines Quellports von einem Session-Traversal-Utilities-for-Network-Address-Translation-Server (STUN-Server) (304), die von mindestens einem Anwendungsserver stammt; und **dadurch gekennzeichnet, dass** das System ferner Folgendes umfasst:
Zuweisen einer verfügbaren Ziel-IP-Adresse und eines verfügbaren Zielports aus einem Pool (203) von IP-Adressen und Ports durch eine Verarbeitungseinheit (210) und Bereitstellen der zugewiesenen Zieladresse und des zugewiesenen Zielports an den STUN-Server als Reaktion auf den Empfang der Vielzahl von Anforderungen; und
Erkennen eines DDoS-Angriffs auf die von der Verarbeitungseinheit (210) zugewiesene Ziel-IP-Adresse durch die Verarbeitungseinheit (210) und Blockieren der angegriffenen Ziel-IP-Adresse als Reaktion auf den DDoS-Angriff durch Stoppen des Zuweisens von Zielports an der angegriffenen Ziel-IP Adresse.

10. Computerprogramm, das auf einem nichtflüchtigen computerlesbaren Speichermedium bereitgestellt ist und in dem Anweisungen gespeichert sind, nach Anspruch 9, wobei die Verarbeitungseinheit (210) die angegriffene IP-Adresse blockiert, indem sie an einen vorgelagerten Router eine Blackholing-Anforderung sendet.

11. Computerprogramm, das auf einem nichtflüchtigen computerlesbaren Speichermedium bereitgestellt ist und in dem Anweisungen gespeichert sind, nach Anspruch 9, wobei die Verarbeitungseinheit (210) die angegriffenen IP-Adressen über einen vordefinierten Zeitraum blockiert.

12. Computerprogramm, das auf einem nichtflüchtigen computerlesbaren Speichermedium bereitgestellt ist und in dem Anweisungen gespeichert sind, nach Anspruch 9, wobei die Verarbeitungseinheit (210) ferner dazu ausgelegt ist, ein Netzwerkadressübersetzungs-Modul (Network Address Translation - NAT) (205) auszuführen, das basierend auf der Vielzahl von Anforderungen von dem STUN-Server (304) die Ziel-IP-Adresse und den Zielport, die von der Verarbeitungseinheit der Anwendungsserver-IP-Adresse und dem Anwendungsserver-Port zugewiesen wurden, übersetzt.

## Revendications

1. Système de protection de serveurs d'applications utilisant un protocole de datagramme utilisateur, UDP, contre des attaques par déni de service distribué, DDoS DDoS, comprenant :
une interface de protocole (201) adaptée pour recevoir à partir d'utilitaires de traversée de session pour un serveur de traduction d'adresse réseau, STUN, (304) une pluralité de requêtes pour une adresse de protocole Internet, IP, source et un port source, la pluralité de requêtes provenant d'au moins un serveur d'applications ; et **caractérisé en ce que** le système comprend en outre :
une unité de traitement (210) adaptée pour allouer une adresse IP de destination et un port de destination disponibles à partir d'un groupe (203) d'adresses IP de destination et de ports de destination et pour fournir au serveur STUN (304) l'adresse IP de destination et le port de destination alloués en réponse à la réception de la pluralité de requêtes ;
dans lequel l'unité de traitement (210) identifie une attaque DDoS sur l'une des adresses IP de destination allouées en détectant un volume de trafic élevé sur l'une des adresses IP de destination allouées, et en bloquant l'adresse IP de destination attaquée en réponse à l'attaque détectée, en arrêtant d'allouer des ports de destination sur l'adresse IP de destination attaquée.

2. Système selon la revendication 1, dans lequel l'unité de traitement (210) bloque l'adresse IP attaquée en envoyant une requête de blackholing à un routeur amont.

3. Système selon la revendication 1, dans lequel l'unité de traitement (210) bloque les adresses IP attaquées pendant une durée prédéfinie.

4. Système selon la revendication 1, dans lequel l'unité de traitement (210) est en outre adaptée pour exécuter un module (205) de traduction d'adresse réseau, NAT, qui traduit une adresse IP de destination et un port de destination alloués par l'unité de traitement à l'adresse IP et port de serveur d'applications, sur la base de la pluralité de requêtes provenant du serveur STUN (304).

5. Procédé de protection de serveurs d'applications utilisant le protocole de datagramme utilisateur, UDP UDP, contre des attaques par déni de service distribué, DDoS, comprenant :
la réception à partir d'utilitaires de traversée de session pour un serveur de traduction d'adresse réseau, STUN, (304) d'une pluralité de requêtes pour une adresse de protocole Internet, IP, source et un port source, provenant d'au moins un serveur d'applications ; et **caractérisé en ce que** le procédé comprend en outre :
l'allocation par une unité de traitement (210) d'une adresse IP de destination et d'un port de destination disponibles à partir d'un groupe (203) d'adresses IP et de ports, et la fourniture au serveur STUN (304) de l'adresse IP de destination et du port de destination alloués en réponse à la réception de la pluralité de requêtes ; et
la détection par l'unité de traitement (210), d'une attaque DDoS sur l'adresse IP de destination allouée par l'unité de traitement (210), et le blocage de l'adresse IP de destination attaquée en réponse à l'attaque DDoS, en arrêtant l'allocation de ports de destination sur l'adresse IP de destination attaquée.

6. Procédé selon la revendication 5, dans lequel l'unité de traitement (210) bloque l'adresse IP attaquée en envoyant une requête de blackholing à un routeur amont.

7. Procédé selon la revendication 5, dans lequel l'unité de traitement (210) bloque les adresses IP attaquées pendant une durée prédéfinie.

8. Procédé selon la revendication 5, dans lequel l'unité de traitement (210) est en outre adaptée pour exécuter un module (205) de traduction d'adresse réseau, NAT, qui traduit une adresse IP de destination et un port de destination alloués par l'unité de traitement à l'adresse IP et port de serveur d'applications, sur la base de la pluralité de requêtes provenant du serveur STUN (304).

9. Programme informatique fourni sur un support de stockage non transitoire lisible par ordinateur stockant des instructions pour mettre en œuvre un procédé de protection de serveurs d'applications utilisant le protocole de datagramme utilisateur, UDP, contre des attaques par déni de service distribué, DDoS, le procédé comprenant :
la réception à partir d'utilitaires de traversée de session pour un serveur de traduction d'adresse réseau, STUN, (304) d'une pluralité de requêtes pour une adresse de protocole Internet, IP, source et un port source, provenant d'au moins un serveur d'applications ; et **caractérisé en ce que** le système comprend en outre :
l'allocation par une unité de traitement (210) d'une adresse IP de destination et d'un port de destination disponibles à partir d'un groupe (203) d'adresses IP et de ports, et la fourniture au serveur STUN de l'adresse IP de destination et du port de destination alloués en réponse à la réception de la pluralité de requêtes ; et
la détection par l'unité de traitement (210) d'une attaque DDoS sur l'adresse IP de destination allouée par l'unité de traitement (210), et le blocage de l'adresse IP de destination attaquée en réponse à l'attaque DDoS, en arrêtant l'allocation de ports de destination sur l'adresse IP de destination attaquée.

10. Programme informatique fourni sur un support de stockage non transitoire lisible par ordinateur stockant des instructions selon la revendication 9, dans lequel l'unité de traitement (210) bloque l'adresse IP attaquée en envoyant une requête de blackholing à un routeur en amont.

11. Programme informatique fourni sur un support de stockage non transitoire lisible par ordinateur stockant des instructions selon la revendication 9, dans lequel l'unité de traitement (210) bloque les adresses IP attaquées pendant une durée prédéfinie.

12. Programme informatique fourni sur un support de stockage non transitoire lisible par ordinateur stockant des instructions selon la revendication 9, dans lequel l'unité de traitement (210) est en outre adaptée pour exécuter un module (205) de traduction d'adresse réseau, NAT, qui traduit l'adresse IP de destination et le port de destination alloués par l'unité de traitement à l'adresse IP et port de serveur d'applications, sur la base de la pluralité de requêtes provenant du serveur STUN (304).
